# EUROPEAN PATENT APPLICATION

(11) **EP 4 721 567 A1**
(43) Date of publication of application: **08.04.2026**
(21) Application number: 24204113.5
(22) Date of filing: 02.10.2024
(51) Int. Cl.: A01P 13/00, A01N 37/22, A01N 25/04

(54) **PROPANIL-BASED SUSPENSION CONCENTRATE FORMULATIONS, PREPARATION PROCESSES, AND METHODS OF USE**

(71) Applicant: Adama Agan Ltd., 7710201 Ashdod (IL)
(72) Inventor: MOCATTA, David, 7044651 Gedera (IL); GUBRIY, Vladimir, 7745510 Ashdod (IL); SILBERT, Gilad, 7917500 Kibutz Dorot (IL)
(74) Representative: ABG Intellectual Property Law, S.L.

(57) **Abstract**

The application relates to a method for the preparation of aqueous suspension concentrate (SC) compositions comprising propanil, in which at least 5% of the propanil particles of are in the form of polymorph B. The application also discloses SC compositions comprising said propanil and to weeding methods using said SC compositions. Further, the application relates to polymorph B of propanil.

## Description

### TECHNICAL FIELD

The present invention provides propanil-based aqueous suspension concentrate formulations, processes for the preparation of propanil-based aqueous suspension concentrate formulations, and methods of use.

### BACKGROUND ART

Suspension concentrates (SCs) are formulations, wherein the active ingredient(s) is present in the form of finely divided solid particles, which are suspended (dispersed) in a liquid dispersing medium such as water or polyhydric alcohols, wherein the active ingredient(s) is insoluble or only sparingly soluble.

SCs have several advantages, e.g., over powder formulations, that they do not produce dust upon reconstitution. Moreover, aqueous SCs have the benefit of not requiring the use of organic solvents, providing good safety and user convenience.

However, there are several problems known to the skilled person which are sometimes encountered with SCs due to settling during prolonged storage or storage at elevated temperatures, the resistance of settled particles to re-suspension, and the formation of crystalline material upon storage. Consequently, these formulations may be difficult to handle, and the bio-efficacy may be inconsistent.

Specifically, crystal growth can be a significant issue in SC formulations. It causes an increase in the fundamental particle size of the dispersed active ingredient(s) and can lead to increased formulation viscosity, increased sedimentation affecting homogeneity and suspensibility, blockage of nozzles in the spray tank, as well as reduction in application efficiency and biological efficacy. Crystal growth is most likely to occur when the active ingredient(s) has partial water solubility and can occur through several different mechanisms.

Propanil (N-(3,4-dichlorophenyl) propanamide; CAS 709-98-8) is a post-emergence synthetic anilide herbicide which is highly selective and it is one of the more widely used herbicide in rice fields.

Propanil is known to disrupt the electron transport chain by inhibiting the photosystem II, within plant leaves, thus impacting plant growth. Specifically, the principal mode of propanil's herbicidal action against weeds is inhibition of their photosynthesis and CO₂ fixation. Plants photosynthesize in two stages. In stage I photosynthetic reactions capture sunlight energy and yield molecules with high energy content. In stage II these molecules react to capture CO₂, yielding carbohydrate precursors. In the stage I reaction a chlorophyll molecule absorbs one photon (light) and loses one electron, starting an electron transport chain reaction leading to the stage II reactions. Propanil inhibits the electron transport chain reaction and its conversion of CO₂ to carbohydrate precursors. That inhibits further development of the weed. In other words, the flow of electrons is blocked between photosystems I and II, at which propanil binds to plastoquinone (QB), of the D1 protein. This competitive binding causes light energy to be dissipated as fluorescence (Harris and Camlin 1988) and inhibition of carbon fixation prevents further growth of the plant (US EPA 2009).

According to the literature, hydrolysis is not a significant route of degradation for propanil. Photolysis has been determined to be a major degradation pathway with half-lives ranging from days to months. Under direct photolysis conditions, the elimination of chlorine atoms occurs, followed by breakage of the amide bond. Studies have identified multiple degradation products.

Therefore, there is an ongoing need for developing stable propanil-based SC formulations.

### SUMMARY OF INVENTION

In one aspect, the present invention relates to a process for preparing an aqueous suspension concentrate (SC) composition, comprising: i) adding water and at least one surfactant(s); (ii) adding at least one agriculturally acceptable excipient selected from an anti-freeze agent, a biocide, an anti-foaming agent, and a mixture thereof; (iii) adding propanil technical material; (iv) milling to obtain said propanil in the form of suspended particles; (v) optionally adding a thickener; and (vi) storing the obtained composition for at least 60 days under 35°C, wherein:
(a) at least 5% of the propanil technical material added in step (iii) is made of propanil in the form of polymorph B (e.g., in a mixture with polymorph A); or following the addition of propanil in step (iii), a pre-prepared propanil-based formulation comprising propanil particles wherein at least 90% of said particles are made of propanil in the form of polymorph B (e.g., in a mixture with polymorph A), is added;
(b) said composition has a pH is higher or equal to 7;
(c) the size of the propanil particles obtained after milling is in the range of from about 1 µm to about 25 µm (D₉₀); and
(d) at least 5% of said particles are made of propanil in the form of polymorph B.

In another aspect, the present invention relates to an aqueous suspension concentrate (SC) composition prepared by the process as defined herein.

In a further aspect, the present invention relates to an aqueous suspension concentrate (SC) composition comprising propanil in the form of suspended particles, wherein at least 5% of said particles are made of propanil in the form of polymorph B and the concentration of said polymorph B is measured up to about 24 hours after the preparation of said composition.

In another aspect, the present invention relates to a method of controlling weed comprising applying to a locus, such as a field of crop, an effective amount of a composition as defined herein.

In yet another aspect, the present invention relates to a crystalline form B of propanil, characterized by an X-ray powder diffraction pattern displaying at least three of the following peaks: 8.0, 12.6, 15.9, 23.1, 25.4 (± 0.2 degrees 2-theta).

### BRIEF DESCRIPTION OF DRAWINGS

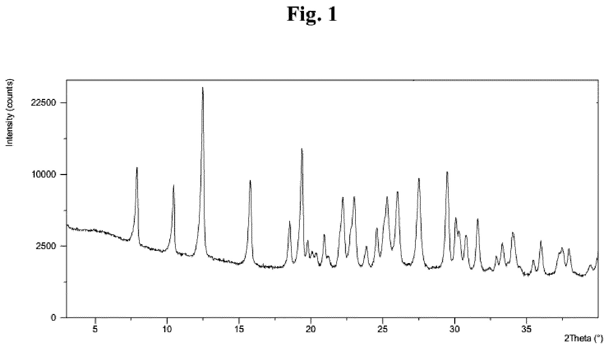

**Fig. 1** shows the X-ray powder diffraction pattern of polymorph B of propanil.

### DETAILED DESCRIPTION

In one aspect, disclosed herein is a process for preparing an aqueous suspension concentrate (SC) composition, comprising: i) adding water and at least one, e.g., one, two, three, four, or more, surfactant(s); (ii) adding at least one agriculturally acceptable excipient selected from an anti-freeze agent, a preservative such as a biocide, an anti-foaming agent, and a mixture thereof; (iii) adding propanil technical material; (iv) milling to obtain said propanil in the form of suspended particles; (v) optionally adding a thickener; and (vi) storing the obtained composition for at least 60 days under 35°C, wherein:
(a) at least 5% of the propanil technical material added in step (iii) is made of propanil in the form of polymorph B; or following the addition of propanil in step (iii), a pre-prepared propanil-based formulation comprising propanil particles wherein at least 90% of said particles are made of propanil in the form of polymorph B, is added;
(b) said composition has a pH is higher or equal to 7;
(c) the size of the propanil particles obtained after milling is in the range of from about 1 µm to about 25 µm (D₉₀); and
(d) at least 5% of said particles are made of propanil in the form of polymorph B.

The solubility of propanil in water is 95 mg/L at 20 °C); and its solubility in organic solvents such as acetone is 1,700,000 mg/L at 20 °C and in ethanol is 675,000 mg/L at 20 °C). Propanil is denser than water, is non-volatile (VP is 0.02 mPa at 25 °C), has a moderate affinity for soils (K_{oc} is 141-800), and a hydrophilic octanol-water partition coefficient (K_{ow} 2.29) (Kanawi *et al.,* 2016).

A major drawback of formulating a sparingly water-soluble active ingredient, such as propanil, as an aqueous SC is Ostwald ripening, wherein the larger crystals of the ingredient grow while the smaller crystals dissolve. This leads to unacceptable PhysChem properties, such as high viscosity, resulting in poor pourability. Large crystals may settle out of suspension, which can lead to the separation of the liquid and solid phases above the acceptable industry standard and result in caking of the solid at the bottom of the vessel. SC formulations may also show increased crystal growth after freeze thaw cycles.

The term "pre-prepared propanil-based formulation" as used herein refers to a formulation comprising propanil in the form of particles wherein at least 90% of said particles are made of propanil in the form of polymorph B.

The term "D₉₀" as used herein defines a size where 90 volume percent of the particles have sizes less than the value given. The particle size distributions can be measured using laser light diffraction equipment, such as Malvern Mastersize 3000 instrument. Such measurements should be performed in water saturated with Propanil.

The term "polymorph B" when used with respect to the form of propanil refers to a crystalline form of propanil which is characterized by main X-Ray Powder Diffraction (XRPD) peaks at 8.0, 12.6, 15.9, 23.1, 25.4 ± 0.2 degrees 2-theta. Additional peaks: 10.5, 18.6, 19.5, 27.6 ± 0.2 degrees 2-theta.

In certain embodiments, the pre-prepared formulation, optionally added following the addition of propanil in step (iii), constitutes at least 1%, e.g., at least 1%, 2%, 3%, 4%, 5%, 6%, 7%, 8%, 9%, 10%, or more, by weight of the total amount of the composition.

In certain embodiments, the pH of the composition prepared according to the process of the invention is adjusted using an inorganic base. Non-limiting examples of inorganic bases include a hydroxide-based salt such as a metal hydroxide (e.g., sodium hydroxide, lithium hydroxide, cesium hydroxide, calcium hydroxide, and magnesium hydroxide); and a carbonate-based salt such as a metal carbonate (e.g., sodium carbonate, potassium carbonate, lithium carbonate, and magnesium carbonate).

In certain embodiments, the at least one surfactant added in step (i) of the process of the invention according to any one of the embodiments above, each independently, is selected from a methyl methacrylate graft copolymer (e.g., Atlox^{™} 4913), an alkyl naphthalene sulfonate formaldehyde condensate salt (e.g., Morwet^{®} D425), an ethoxylated tristyrylphenol (e.g., Soprophor^{®} TS/54), and a (C1-C8)-alkyl alcohol ethylene oxide-propylene oxide copolymer (such as n-butoxy butyl alcohol ethylene oxide-propylene oxide block copolymers, e.g., Atlas^{®} G-5000).

In certain embodiments, the at least one surfactant added in step (i) of the process of the invention according to any one of the embodiments above, is a mixture of four surfactants. Particular such embodiments are those wherein: (i) a first surfactant is a methyl methacrylate graft copolymer (e.g., Atlox^{™} 4913); (ii) a second surfactant is an alkyl naphthalene sulfonate formaldehyde condensate salt (e.g., Morwet^{®} D425); (iii) a third surfactant is an ethoxylated tristyrylphenol (e.g., Soprophor^{®} TS/54); and (iv) a fourth surfactant is a (C1-C8)-alkyl alcohol ethylene oxide-propylene oxide copolymer (such as n-butoxy butyl alcohol ethylene oxide-propylene oxide block copolymers, e.g., Atlas^{®} G-5000). More particular such embodiments are those wherein (i) said first surfactant constitutes from about 0.5% to about 10%, e.g., from about 1% to about 8%, from about 1.5% to about 6%, from about 2% to about 4%, or from about 2.5% to about 3.5%, by weight of said composition; (ii) said second surfactant constitutes from about 0.1% to about 5%, e.g., from about 0.2% to about 3%, from about 0.3% to about 1.5%, or from about 0.35% to about 1%, by weight of said composition; (iii) said third surfactant constitutes from about 0.5% to about 5%, e.g., from about 0.6% to about 4%, from about 0.7% to about 3%, from about 0.8% to about 2%, or from about 0.9% to about 1.5%, by weight of said composition; and/or (iv) said fourth surfactant constitutes from about 0.5% to about 5%, e.g., from about 0.6% to about 4%, from about 0.7% to about 3%, from about 0.8% to about 2%, or from about 0.9% to about 1.5%, by weight of said composition.

The term "agriculturally acceptable excipient" as used herein refers to an essentially inert substance that can be used as a diluent and/or carrier for an active agent in a composition for treatment of plants and/or plant parts. Non-limiting examples of agriculturally acceptable excipients include an anti-freeze agent, a preservative (e.g., a biocide), an anti-foaming agent, and a thickener.

The term "anti-freeze agent" as used herein refers to an additive which lowers the freezing point of a water-based liquid. Non-limiting examples of anti-freeze agents include propylene glycol; ethylene glycol; urea; glycerine; and an inorganic salt such as sodium chloride, magnesium chloride, calcium chloride, potassium acetate, sodium acetate, ammonium phosphate, ammonium nitrate, and ammonium sulphate.

The term "preservative" as used herein refers to a chemical that is used in preventing spoilage and extending the shelf life of agriculture products, such as an antioxidant, biocide, and thermal stabilizer. According to the literature, without the addition or with an insufficient addition of preservatives, various problems result, mainly due to the growth of microorganisms; development of unpleasant odors; discolorations; pH changes, to which some pesticides are sensitive; changes in the viscosity caused by the degradation of polysaccharide-comprising thickeners; or phase separation/ sedimentation of emulsions or suspensions as the result of microbial degradation of surfactants. Non-limiting examples of preservatives include isothiazolinone-based preservatives such as methyl-2H-isothiazol-3-one (MIT), 1,2-benzisothiazol-3(2H)-one (BIT; e.g., Proxel^{®} GXL), chlor-2-methyl-2H-isothiazol-3-on (CMIT), formaldehyde, zinc oxide, sodium propionate, and sodium benzoate.

The terms "anti-foaming agent" or "defoamer" are used herein interchangeably and refer to a chemical agent that is added to a composition so as to prevent, attenuate, or counter foam generation in the composition. Generally, such agents have surface active properties, are insoluble in the foaming medium, easily spreadable on the foamy surface, possess affinity to the air-liquid surface, and destabilize the foam lamellas which rupture the air bubbles and break down the surface foam. Non-limiting examples of anti-foaming agents include siloxane-based antifoams such as organopolysiloxanes, e.g., polydimethylsiloxane-based compounds (e.g., SAG^{™} 1572 and Silicaid AF-100); a mixture of alkenes, C11-C12, hydroformylation products, low boiling, or a commercially available product comprising it such as Geronol AF 80; a mineral oil-based defoamer or a commercially available product comprising it such as Lucrafoam^{®} PDT; a blend of special wax, hydrophobic silica, and mineral oil or a commercially available product comprising it such as DEE FO^{®} 3010E/50; a silicon emulsion or a commercially available product comprising it such as Silfoam^{®} SE 47, Silfoam^{®} SRE, Silcolapse^{®} RG 12, and SAG 10E; and a silicone-based compound or a commercially available product comprising it such as Silcolapse^{™} 910, Xiameter^{™} ACP-1500, and Xiameter^{®} ACP-1000.

In certain embodiments, the at least one agriculturally acceptable excipient added in step (ii) of the process of the invention according to any one of the embodiments above is selected from an anti-freeze agent such as urea, propane-1,2-diol, and a combination thereof; an anti-foaming agent such as a siloxane-based antifoam such as organopolysiloxanes (e.g., polydimethylsiloxane-based compounds); a biocide such as an isothiazolinone-based preservative (e.g., PROXEL^{™} GXL, i.e., a 20% aqueous dipropylene glycol solution of 1,2-benzisothiazolin-3-one); and a combination thereof.

The terms "thickening agent" or "thickener" are used here interchangeably and refer to an additive that is added to an agrochemical formulation to increase its viscosity and prevent sedimentation of the active ingredient(s), thereby conferring greater stability and allowing storage thereof for a longer period. Non-limiting examples of thickening agents include starch, dextrin, cellulose, methyl cellulose, ethyl cellulose, carboxymethyl cellulose, hydroxyethyl cellulose, hydroxypropyl cellulose, carboxymethyl starch, pullulan, sodium alginate, ammonium alginate, propylene glycol alginate, guar gum, locust bean gum, Arabic gum, xanthan gum, diutan gum, gelatin, casein, polyvinyl alcohol, polyethylene oxide, polyethylene glycol, a block polymer of ethylene and propylene, sodium polyacrylate, polyvinyl pyrrolidone, and carrageenan.

In certain embodiments, the thickener optionally added in step (v) of the process of the invention according to any one of the embodiments above is selected from a polysaccharide-based compound such as xanthan gum.

In certain embodiments, the at least one agriculturally acceptable excipient added in step (ii) of the process of the invention according to any one of the embodiments above is a combination of (i) an anti-freeze agent such as a combination of urea and propane-1,2-diol; (ii) a pH modifier such as an inorganic base (e.g., sodium hydroxide); (iii) a biocide such as an isothiazolinone-based preservative (e.g., PROXEL^{™} GXL, i.e., a 20% aqueous dipropylene glycol solution of 1,2-benzisothiazolin-3-one); and (iv) an anti-foaming agent such as a polydimethylsiloxane-based compound (e.g., SAG^{™} 1572 and silicaid AF-100) (also referred to herein as ***"a process for the preparation of propanil-excipients-based composition").*** Particular such embodiments are those wherein a thickener is added in step (v) of said process. more particular such embodiments are those wherein said thickener is a polysaccharide-based compound such as xanthan gum.

In certain embodiments, the anti-freeze agent added in the process for the preparation of propanil-excipients-based composition constitutes from about 1% to about 20%, e.g., from about 1.5% to about 15%, from about 2% to about 10%, from about 2.5% to about 8%, or from about 3% to about 6%, by weight of said composition; the pH of the composition obtained in the process for the preparation of propanil-excipients-based composition is in the range of from about 7.5 to about 11, e.g., from about 8 to 10; the biocide added in the process for the preparation of propanil-excipients-based composition constitutes from about 0.01% to about 1%, e.g., 0.05% to about 0.8%, from about 0.07% to about 0.5%, or from about 0.09% to about 0.3%, by weight of said composition; the anti-foaming agent added in the process for the preparation of propanil-excipients-based composition constitutes from about 0.05% to about 5%, e.g., 0.1% to about 2%, from about 0.15% to about 1%, or from about 0.2% to about 0.5%, by weight of said composition; and/or the thickener when added in the process for the preparation of propanil-excipients-based composition constitutes from about 0.05% to about 5%, e.g., 0.07% to about 2%, from about 0.1% to about 1%, or from about 0.15% to about 0.7%, by weight of said composition.

In certain embodiments, at least 10%, e.g., at least 20%, at least 30%, or at least 40%, of the suspended particles of propanil obtained in step (iv) of the process of the invention according to any one of the embodiments above are made of propanil in the form of polymorph B. Particular such embodiments are those wherein the percentage (relative amount of polymorph B to total amount of propanil) of said polymorph B is measured not more than 24 hours, e.g., not more than 20 hours, not more than 16 hours, or no more than 12 hours, after the preparation of said composition (and preferably wherein said composition is kept at room temperature after its preparation and until said measurement).

In certain embodiments, at least 5% of the suspended particles of propanil obtained in step (iv) of the process of the invention according to any one of the embodiments above are made of propanil in the form of polymorph B, and the composition is stored for at least 60 days under 35°C in step (vi) of said process.

In certain embodiments, at least 10% of the suspended particles of propanil obtained in step (iv) of the process of the invention according to any one of the embodiments above are made of propanil in the form of polymorph B, and the composition is stored for at least 35 under 35°C in step (vi) of said process.

In certain embodiments, at least 20% of the suspended particles of propanil obtained in step (iv) of the process of the invention according to any one of the embodiments above are made of propanil in the form of polymorph B, and the composition is stored for at least 25 days or more under 35°C in step (vi) of said process.

In another aspect, the present invention provides an aqueous suspension concentrate (SC) composition prepared by the process of the invention according to any one of the embodiments above.

In certain embodiments, the aqueous SC composition prepared by the process of the invention according to any one of the embodiments above comprises: (i) propanil in an amount of from about 10% to about 60% by weight of said composition; (ii) a combination of urea and propane-1,2-diol, as an anti-freeze agent, in an amount of from about 5% to about 20% by weight of said composition, wherein the weight ratio of propane-1,2-diol:urea is about 1:1 to about 50:1; (iii) an isothiazolinone-based preservative, as a biocide, in an amount of from about 0.05% to about 0.5% by weight of said composition; (iv) a polydimethylsiloxane-based compound, as an anti-foaming agent, in an amount of from about 0.1% to about 0.5% by weight of said composition; (v) xanthan gum, as a thickener, in an amount of from about 0.05% to about 1% by weight of said composition; and (vi) a mixture of surfactants comprising a methyl methacrylate graft copolymer (e.g., Atlox^{™} 4913) in an amount of from about 1% to about 5% by weight of said composition; an alkyl naphthalene sulfonate formaldehyde condensate salt (e.g., Morwet^{®} D425) in an amount of from about 0.1% to about 1% by weight of said composition; an ethoxylated tristyrylphenol (e.g., Soprophor^{®} TS/54) in an amount of from about 0.5% to about 3% by weight of said composition; and (a (C1-C8)-alkyl alcohol ethylene oxide-propylene oxide copolymer in an amount of from about 0.5% to about 3% by weight of said composition, wherein the pH of said composition is between about 8 to about 10. Particular such embodiments are those wherein, the weight ratio of propane-1,2-diol:urea is from about 1:1 to about 5:1, e.g., 3:1 to about 1:1, about 2:1 to about 1.5:1, about 1.5:1, about 1.4:1, or about 1.3:1.

In a further aspect, the present invention provides an aqueous suspension concentrate (SC) composition comprising propanil in the form of suspended particles, wherein at least 5% of said particles are made of propanil in the form of polymorph B and the concentration of said polymorph B is measured up to about 24 hours, i.e., not more than 24 hours, e.g., not more than 20 hours, not more than 16 hours, or no more than 12 hours, after the preparation of said composition (preferably wherein said composition was kept at room temperature after its preparation and until said measurement).

In certain embodiments, at least 10%, e.g., at least 20%, at least 30%, or at least 40%, of the suspended particles comprised within the composition of the invention are made of propanil in the form of polymorph B. particular such embodiments are those wherein the concentration of said polymorph B is measured not more than 24 hours, e.g., not more than 20 hours, not more than 16 hours, or no more than 12 hours, after the preparation of said composition (preferably wherein said composition was kept at room temperature after its preparation and until said measurement).

In certain embodiments, the composition of the invention according to any one of the embodiments above further comprises at least one, e.g., one, two, three, four, or more, surfactant(s) (also referred to herein as ***"a propanil-surfactant-based SC composition").*** particular such embodiments are those wherein said at least one surfactant each independently is selected from a methyl methacrylate graft copolymer (e.g., Atlox^{™} 4913), an alkyl naphthalene sulfonate formaldehyde condensate salt (e.g., Morwet^{®} D425), an ethoxylated tristyrylphenol (e.g., Soprophor^{®} TS/54), and a (C1-C8)-alkyl alcohol ethylene oxide-propylene oxide copolymer (such as n-butoxy butyl alcohol ethylene oxide-propylene oxide block copolymers, e.g., Atlas^{®} G-5000).

In certain embodiments, the at least one surfactant comprised within the propanil-surfactant-based SC composition of the invention is a mixture of four surfactants. Particular such embodiments are those wherein: (i) a first surfactant is a methyl methacrylate graft copolymer (e.g., Atlox^{™} 4913); (ii) a second surfactant is an alkyl naphthalene sulfonate formaldehyde condensate salt (e.g., Morwet^{®} D425); (iii) a third surfactant is an ethoxylated tristyrylphenol (e.g., Soprophor^{®} TS/54); and (iv) a fourth surfactant is a (C1-C8)-alkyl alcohol ethylene oxide-propylene oxide copolymer (such as n-butoxy butyl alcohol ethylene oxide-propylene oxide block copolymers, e.g., Atlas^{®} G-5000). More particular such embodiments are those wherein: (i) said first surfactant constitutes from about 0.5% to about 10%, e.g., from about 1% to about 8%, from about 1.5% to about 6%, from about 2% to about 4%, or from about 2.5% to about 3.5%, by weight of said composition; (ii) said second surfactant constitutes from about 0.1% to about 5%, e.g., from about 0.2% to about 3%, from about 0.3% to about 1.5%, or from about 0.35% to about 1%, by weight of said composition; (iii) said third surfactant constitutes from about 0.5% to about 5%, e.g., from about 0.6% to about 4%, from about 0.7% to about 3%, from about 0.8% to about 2%, or from about 0.9% to about 1.5%, by weight of said composition; and/or (iv) said fourth surfactant constitutes from about 0.5% to about 5%, e.g., from about 0.6% to about 4%, from about 0.7% to about 3%, from about 0.8% to about 2%, or from about 0.9% to about 1.5%, by weight of said composition.

In certain embodiments, the SC composition of the invention according to any one of the embodiments above further comprises at least one, e.g., one, two, three, four, or more, agriculturally acceptable excipient(s) such as an anti-freeze agent, a pH modifier, a biocide, an anti-foaming agent, a thickener, and a combination thereof, each as defined hereinabove. Particular such embodiments are those wherein said anti-freeze agent is selected from urea, propane-1,2-diol, and a combination thereof; said pH modifier is selected from an inorganic base; said anti-foaming agent is selected from a siloxane-based antifoam such as organopolysiloxanes (e.g., polydimethylsiloxane-based compounds); said thickener is selected from a polysaccharide-based compound (e.g., xanthan gum); and said biocide is selected from an isothiazolinone-based preservative (e.g., PROXEL^{™} GXL, i.e., a 20% aqueous dipropylene glycol solution of 1,2-benzisothiazolin-3-one).

In certain embodiments, the SC composition of the invention according to any one of the embodiments above further comprises a combination of: (i) an anti-freeze agent such as a combination of urea and propane-1,2-diol; (ii) a pH modifier such as an inorganic base (e.g., sodium hydroxide); (iii) a biocide such as an isothiazolinone-based preservative (e.g., PROXEL^{™} GXL, i.e., a 20% aqueous dipropylene glycol solution of 1,2-benzisothiazolin-3-one); (iv) an anti-foaming agent such as a polydimethylsiloxane-based compound (e.g., SAG^{™} 1572 and silicaid AF-100); and (v) a thickener such as a polysaccharide-based compound (e.g., xanthan gum). Particular such embodiments are those wherein said anti-freeze agent constitutes from about 1% to about 20%, e.g., from about 1.5% to about 15%, from about 2% to about 10%, from about 2.5% to about 8%, or from about 3% to about 6%, by weight of said composition; the pH of said composition is higher or equal to 7, more specifically the pH of said composition is in the range of from about 7.5 to about 11, e.g., from about 8 to 10; said biocide constitutes from about 0.01% to about 1%, e.g., 0.05% to about 0.8%, from about 0.07% to about 0.5%, or from about 0.09% to about 0.3%, by weight of said composition; said anti-foaming agent constitutes from about 0.05% to about 5%, e.g., 0.1% to about 2%, from about 0.15% to about 1%, or from about 0.2% to about 0.5%, by weight of said composition; and/or said thickener constitutes from about 0.05% to about 5%, e.g., 0.07% to about 2%, from about 0.1% to about 1%, or from about 0.15% to about 0.7%, by weight of said composition.

In certain embodiments, the SC composition of the invention according to any one of the embodiments above comprises: (i) propanil in an amount of from about 10% to about 60% by weight of said composition; (ii) a combination of urea and propane-1,2-diol, an anti-freeze agent, in an amount of from about 5% to about 20% by weight of said composition, wherein the weight ratio of propane-1,2-diol:urea is about 1:1 to about 50:1; (iii) an isothiazolinone-based preservative, as a biocide, in an amount of from about 0.05% to about 0.5% by weight of said composition; (iv) a polydimethylsiloxane-based compound, as an anti-foaming agent, in an amount of from about 0.1% to about 0.5% by weight of said composition; (v) xanthan gum, as a thickener, in an amount of from about 0.05% to about 1% by weight of said composition; and (vi) a mixture of surfactants comprising a methyl methacrylate graft copolymer (e.g., Atlox^{™} 4913) in an amount of from about 1% to about 5% by weight of said composition; an alkyl naphthalene sulfonate formaldehyde condensate salt (e.g., Morwet^{®} D425) in an amount of from about 0.1% to about 1% by weight of said composition; an ethoxylated tristyrylphenol (e.g., Soprophor^{®} TS/54) in an amount of from about 0.5% to about 3% by weight of said composition; and (a (C1-C8)-alkyl alcohol ethylene oxide-propylene oxide copolymer in an amount of from about 0.5% to about 3% by weight of said composition, wherein the pH of said composition is between about 8 to about 10. Particular such embodiments are those wherein the weight ratio of propane-1,2-diol:urea is about 1:1 to about 5:1, e.g., 3:1 to about 1:1, about 2:1 to about 1.5:1, about 1.5:1, about 1.4:1, or about 1.3:1.

In certain embodiments, the SC composition of the invention according to any one of the embodiments above comprises propanil particles having a size (D₉₀ value) in the range of from about 1 µm to about 25 µm, preferably in the range of from about 1.5 µm to about 20 µm, more preferably from about 2 µm to about 15 µm, when said composition is stored at a temperature not higher than 35°C.

In another aspect, the present invention relates to a method of controlling weed (undesired vegetation) comprising applying to a locus an effective amount of an aqueous SC composition of the invention as defined in any one of the embodiments above or an aqueous SC composition prepared by the process of the invention according to any one of the embodiments above.

The term "locus" as used herein refers not only to areas where the weed may already be developed, but also to areas where weeds have yet to emerge, and to areas under cultivation. Locus includes the crop and propagation material of the crop (all the generative parts of the crop such as seeds and vegetative plant material such as cuttings and tubers, which can be used for the multiplication of the plant). Examples of propagation material of the crop include seeds, tubers, spores, corms, bulbs, rhizomes, sprouts basal shoots, stolons, buds and other parts of plants, including seedlings and young plants, which could be transplanted after germination or after emergence from soil. Locus also includes the area surrounding the crop and the growing media of the crop, such as soil and crop field.

In certain embodiments, the locus is a field of crop. The term "crop" (or "plant") as used herein refers to whole plants, plant organs (e.g., leaves, stems, twigs, roots, trunks, limbs, shoots, fruits, etc.), plant cells, or plant seeds. Non-limiting examples of crops are rice, wheat, barley, potato, soybean, and corn.

Non-limiting examples of weeds that can be controlled by the method of the present invention include *Aeschynomene virginica, Alisma plantago-aquatica, Amaranthus retroflexus, Amaranthus spp., Ammannia coccinea, Brachiaria platyphylla, Butomus umbellatus, Caperonia castaneifolia, Cassia obtusifolius, Croton spp., Cyperus difformis, Cyperus iria, Cyperus spp., Digitaria spp., Echinochloa colonum, Echinochloa crus-galli, Echinochloa crus-pavonis, Echinochloa phyllopogon, Echinochloa spp., Eclipta prostrata, Eleocharis spp., Eleusine indica, Fimbristylis miliacea, Ipomoea spp., Melochia corchorifolia, Panicum texanum, Phacelia hastata, Physalis spp., Rhynchospora corniculate, Rumex crispus, Scirpus mucronatus, Sesbania herbacea, Setaria spp., Setaria viridis, Urochloa mutica, orUrochloa texana.*

In yet another aspect, the present invention provides a crystalline form B of propanil, characterized by an X-ray powder diffraction pattern displaying at least three, e.g., three, four, or five, of the following peaks: 8.0, 12.6, 15.9, 23.1, 25.4 (± 0.2 degrees 2-theta).

In certain embodiments, the X-ray powder diffraction pattern of the crystalline form B of propanil displays all of the following peaks: 8.0, 12.6, 15.9, 23.1, 25.4 (± 0.2 degrees 2-theta).

In certain embodiments, the X-ray powder diffraction pattern of the crystalline form B of propanil disclosed herein displays at least one, e.g., one, two, three, or four, additional peak selected from 10.5, 18.6, 19.5, 27.6 (± 0.2 degrees 2-theta). Particular such embodiments are those wherein said pattern displays all four of the additional peaks.

### CLAUSES

Clause 1. A process for preparing an aqueous suspension concentrate (SC) composition, comprising:
(i) adding water and at least one surfactant(s); (ii) adding at least one agriculturally acceptable excipient selected from an anti-freeze agent, a biocide, an anti-foaming agent, and a mixture thereof; (iii) adding propanil technical material; (iv) milling to obtain said propanil in the form of suspended particles; (v) optionally adding a thickener; and (vi) storing the obtained composition for at least 60 days under 35°C,
   wherein:
   (a) at least 5% of the propanil technical material added in step (iii) is made of propanil in the form of polymorph B; or following the addition of propanil in step (iii), a pre-prepared propanil-based formulation comprising propanil particles wherein at least 90% of said particles are made of propanil in the form of polymorph B, is added;
   (b) said composition has a pH in the range of from about 7.5 to about 11;
   (c) the size of the propanil particles obtained after milling is in the range of from about 1 µm to about 25 µm (D₉₀); and
   (d) at least 5% of said particles are made of propanil in the form of polymorph B.

Clause 2. The process of clause 1, wherein the pH of said composition is adjusted using an inorganic base such as a hydroxide-based salt (e.g., sodium hydroxide) and a carbonate-based salt (e.g., magnesium carbonate).

Clause 3. The process of clause 1, wherein said at least one surfactant each independently is selected from a methyl methacrylate graft copolymer (e.g., Atlox^{™} 4913), an alkyl naphthalene sulfonate formaldehyde condensate salt (e.g., Morwet^{®} D425), an ethoxylated tristyrylphenol (e.g., Soprophor^{®} TS/54), and a (C1-C8)-alkyl alcohol ethylene oxide-propylene oxide copolymer (such as n-butoxy butyl alcohol ethylene oxide-propylene oxide block copolymers, e.g., Atlas^{®} G-5000).

Clause 4. The process according to any one of clauses 1-3, wherein said at least one surfactant is a mixture of four surfactants.

Clause 5. The process of clause 4, wherein: (i) a first surfactant is a methyl methacrylate graft copolymer (e.g., Atlox^{™} 4913); (ii) a second surfactant is an alkyl naphthalene sulfonate formaldehyde condensate salt (e.g., Morwet^{®} D425); (iii) a third surfactant is an ethoxylated tristyrylphenol (e.g., Soprophor^{®} TS/54); and (iv) a ourth surfactant is a (C₁-C₈)-alkyl alcohol ethylene oxide-propylene oxide copolymer (such as n-butoxy butyl alcohol ethylene oxide-propylene oxide block copolymers, e.g., Atlas^{®} G-5000).

Clause 6. The process of clause 5, wherein: (i) said first surfactant constitutes from about 0.5% to about 10% by weight of said composition; (ii) said second surfactant constitutes from about 0.1% to about 5% by weight of said composition; (iii) said third surfactant constitutes from about 0.5% to about 5% by weight of said composition; and/or (iv) said fourth surfactant constitutes from about 0.5% to about 5% by weight of said composition.

Clause 7. The process according to any one of clauses 1-6, wherein said anti-freeze agent is selected from urea, propane-1,2-diol, and a combination thereof; said anti-foaming agent is selected from a siloxane-based antifoam such as organopolysiloxanes (e.g., polydimethylsiloxane-based compounds); said biocide is selected from an isothiazolinone-based preservative (e.g., PROXEL^{™} GXL, i.e., a 20% aqueous dipropylene glycol solution of 1,2-benzisothiazolin-3-one); and said thickener is selected from a polysaccharide-based compound (e.g., xanthan gum).

Clause 8. The process of clause 7, wherein said at least one agriculturally acceptable excipient is a combination of (i) an anti-freeze agent such as a combination of urea and propane-1,2-diol; (ii) a pH modifier such as an inorganic base (e.g., sodium hydroxide); (iii) a biocide such as an isothiazolinone-based preservative (e.g., PROXEL^{™} GXL, i.e., a 20% aqueous dipropylene glycol solution of 1,2-benzisothiazolin-3-one); and (iv) an anti-foaming agent such as a polydimethylsiloxane-based compound (e.g., SAG^{™} 1572 and silicaid AF-100).

Clause 9. The process of clause 8, wherein a thickener such as a polysaccharide-based compound (e.g., xanthan gum) is added in step (v).

Clause 10. The process of clause 8 or 9, wherein said anti-freeze agent constitutes from about 1% to about 20% by weight of said composition; the pH of said composition is higher or equal to 7; said biocide constitutes from about 0.01% to about 1% by weight of said composition; said anti-foaming agent constitutes from about 0.05% to about 5% by weight of said composition; and/or said thickener constitutes from about 0.05% to about 5% by weight of said composition.

Clause 11. The process according to any one of clauses 1-10, wherein at least 10%, e.g., at least 20%, at least 30%, or at least 40%, of said particles are made of propanil in the form of polymorph B.

Clause 12. The process of clause 11, wherein the concentration of said polymorph B is measured not more than 24 hours, e.g., not more than 20 hours, not more than 16 hours, or no more than 12 hours, after the preparation of said composition.

Clause 13. The process of clause 11 or 12, wherein: (i) 5% or more of said particles are made of propanil in the form of polymorph B, and the composition is stored for 60 days or more under 35°C in step (vi); (ii) 10% or more of said particles are made of propanil in the form of polymorph B, and the composition is stored for 35 days or more under 35°C in step (vi); or (iii) 20% or more of said particles are made of propanil in the form of polymorph B, and the composition is stored for 25 days or more under 35°C in step (vi).

Clause 14. An aqueous suspension concentrate (SC) composition prepared by the process according to any one of clauses 1-13.

Clause 15. The aqueous SC composition of clause 14, comprising: (i) propanil in an amount of from about 10% to about 60% by weight of said composition; (ii) a combination of urea and propane-1,2-diol, as an anti-freeze agent, in an amount of from about 5% to about 20% by weight of said composition, wherein the weight ratio of propane-1,2-diol:urea is about 1:1 to about 50:1; (iii) an isothiazolinone-based preservative, as a biocide, in an amount of from about 0.05% to about 0.5% by weight of said composition; (iv) a polydimethylsiloxane-based compound, as an anti-foaming agent, in an amount of from about 0.1% to about 0.5% by weight of said composition; (v) xanthan gum, as a thickener, in an amount of from about 0.05% to about 1% by weight of said composition; and (vi) a mixture of surfactants comprising a methyl methacrylate graft copolymer (e.g., Atlox^{™} 4913) in an amount of from about 1% to about 5% by weight of said composition; an alkyl naphthalene sulfonate formaldehyde condensate salt (e.g., Morwet^{®} D425) in an amount of from about 0.1% to about 1% by weight of said composition; an ethoxylated tristyrylphenol (e.g., Soprophor^{®} TS/54) in an amount of from about 0.5% to about 3% by weight of said composition; and (a (C₁-C₈)-alkyl alcohol ethylene oxide-propylene oxide copolymer in an amount of from about 0.5% to about 3% by weight of said composition, wherein the pH of said composition is between about 8 to about 10.

Clause 16. The aqueous SC composition of clause 15, wherein the weight ratio of propane-1,2-diol:urea is about 1:1 to about 5:1.

Clause 17. An aqueous suspension concentrate (SC) composition comprising propanil in the form of suspended particles, wherein at least 5% of said particles are made of propanil in the form of polymorph B and the concentration of said polymorph B is measured up to about 24 hours after the preparation of said composition.

Clause 18. The aqueous SC composition of clause 17, wherein at least 10%, e.g., at least 20%, at least 30%, or at least 40%, of said particles are made of propanil in the form of polymorph B.

Clause 19. The aqueous SC composition of clause 17 or 18, wherein the concentration of said polymorph B is measured not more than 24 hours, e.g., not more than 20 hours, not more than 16 hours, or no more than 12 hours, after the preparation of said composition.

Clause 20. The aqueous SC composition of any one of clauses 17-19, further comprising at least one, e.g., one, two, three, four, or more, surfactant(s).

Clause 21. The aqueous SC composition of clause 20, wherein said at least one surfactant each independently is selected from a methyl methacrylate graft copolymer (e.g., Atlox^{™} 4913), an alkyl naphthalene sulfonate formaldehyde condensate salt (e.g., Morwet^{®} D425), an ethoxylated tristyrylphenol (e.g., Soprophor^{®} TS/54), and a (C₁-C₈)-alkyl alcohol ethylene oxide-propylene oxide copolymer (such as n-butoxy butyl alcohol ethylene oxide-propylene oxide block copolymers, e.g., Atlas^{®} G-5000).

Clause 22. The aqueous SC composition of clause 20 or 21, wherein said at least one surfactant is a mixture of four surfactants.

Clause 23. The aqueous SC composition of clause 22, wherein: (i) a first surfactant is a methyl methacrylate graft copolymer (e.g., Atlox^{™} 4913); (ii) a second surfactant is an alkyl naphthalene sulfonate formaldehyde condensate salt (e.g., Morwet^{®} D425); (iii) a third surfactant is an ethoxylated tristyrylphenol (e.g., Soprophor^{®} TS/54); and (iv) a fourth surfactant is a (C₁-C₈)-alkyl alcohol ethylene oxide-propylene oxide copolymer (such as n-butoxy butyl alcohol ethylene oxide-propylene oxide block copolymers, e.g., Atlas^{®} G-5000).

Clause 24. The aqueous SC composition of clause 23, wherein: (i) said first surfactant constitutes from about 0.5% to about 10% by weight of said composition; (ii) said second surfactant constitutes from about 0.1% to about 5% by weight of said composition; (iii) said third surfactant constitutes from about 0.5% to about 5% by weight of said composition; and/or (iv) said fourth surfactant constitutes from about 0.5% to about 5% by weight of said composition.

Clause 25. The aqueous SC composition of any one of clauses 17-24, further comprising at least one agriculturally acceptable excipient such as an anti-freeze agent, a pH modifier, a biocide, an anti-foaming agent, a thickener, and a combination thereof.

Clause 26. The aqueous SC composition of clause 25, wherein said anti-freeze agent is selected from urea, propane-1,2-diol, and a combination thereof; said pH modifier is selected from an inorganic base; said anti-foaming agent is selected from a siloxane-based antifoam such as organopolysiloxanes (e.g., polydimethylsiloxane-based compounds); said thickener is selected from a polysaccharide-based compound (e.g., xanthan gum); and said biocide is selected from an isothiazolinone-based preservative (e.g., PROXEL^{™} GXL, i.e., a 20% aqueous dipropylene glycol solution of 1,2-benzisothiazolin-3-one).

Clause 27. The aqueous SC composition of clause 25 or 26, wherein said composition comprises a combination of (i) an anti-freeze agent such as a combination of urea and propane-1,2-diol; (ii) a pH modifier such as an inorganic base (e.g., sodium hydroxide); (iii) a biocide such as an isothiazolinone-based preservative (e.g., PROXEL^{™} GXL, i.e., a 20% aqueous dipropylene glycol solution of 1,2-benzisothiazolin-3-one); (iv) an anti-foaming agent such as a polydimethylsiloxane-based compound (e.g., SAG^{™} 1572 and silicaid AF-100); and (v) a thickener such as a polysaccharide-based compound (e.g., xanthan gum).

Clause 28. The aqueous SC composition of clause 27, wherein said anti-freeze agent constitutes from about 1% to about 20% by weight of said composition; the pH of said composition is higher or equal to 7; said biocide constitutes from about 0.01% to about 1% by weight of said composition; said anti-foaming agent constitutes from about 0.05% to about 5% by weight of said composition; and/or said thickener constitutes from about 0.05% to about 5% by weight of said composition.

Clause 29. The aqueous SC composition of any one of clauses 17-28, comprising: (i) propanil in an amount of from about 10% to about 60% by weight of said composition; (ii) a combination of urea and propane-1,2-diol, an anti-freeze agent, in an amount of from about 5% to about 20% by weight of said composition, wherein the weight ratio of propane-1,2-diol:urea is about 1:1 to about 50:1; (iii) an isothiazolinone-based preservative, as a biocide, in an amount of from about 0.05% to about 0.5% by weight of said composition; (iv) a polydimethylsiloxane-based compound, as an anti-foaming agent, in an amount of from about 0.1% to about 0.5% by weight of said composition; (v) xanthan gum, as a thickener, in an amount of from about 0.05% to about 1% by weight of said composition; and (vi) a mixture of surfactants comprising a methyl methacrylate graft copolymer (e.g., Atlox^{™} 4913) in an amount of from about 1% to about 5% by weight of said composition; an alkyl naphthalene sulfonate formaldehyde condensate salt (e.g., Morwet^{®} D425) in an amount of from about 0.1% to about 1% by weight of said composition; an ethoxylated tristyrylphenol (e.g., Soprophor^{®} TS/54) in an amount of from about 0.5% to about 3% by weight of said composition; and (a (C₁-C₈)-alkyl alcohol ethylene oxide-propylene oxide copolymer in an amount of from about 0.5% to about 3% by weight of said composition, wherein the pH of said composition is between about 8 to about 10.

Clause 30. The aqueous SC composition of clause 29, wherein the weight ratio of propane-1,2-diol:urea is about 1:1 to about 5:1.

Clause 31. The aqueous SC composition according to any one of clauses 17-30, wherein the size of the propanil particles is in the range of from about 1 µm to about 25 µm (D₉₀), when said composition is stored at a temperature not higher than 35°.

Clause 32. A method of controlling weed comprising applying to a locus an effective amount of a composition according to any one of clauses 14-31.

Clause 33. The method of clause 32, wherein said locus is a field of crop.

Clause 34. The method of clause 33, wherein said crop is selected from rice, wheat, barley, potato, soybean, and corn.

Clause 35. The method of clause 32, wherein said weed is *Aeschynomene virginica, Alisma plantago-aquatica, Amaranthus retroflexus, Amaranthus spp., Ammannia coccinea, Brachiaria platyphylla, Butomus umbellatus, Caperonia castaneifolia, Cassia obtusifolius, Croton spp., Cyperus difformis, Cyperus iria, Cyperus spp., Digitaria spp., Echinochloa colonum, Echinochloa crus-galli, Echinochloa crus-pavonis, Echinochloa phyllopogon, Echinochloa spp., Eclipta prostrata, Eleocharis spp., Eleusine indica, Fimbristylis miliacea, Ipomoea spp., Melochia corchorifolia, Panicum texanum, Phacelia hastata, Physalis spp., Rhynchospora corniculate, Rumex crispus, Scirpus mucronatus, Sesbania herbacea, Setaria spp., Setaria viridis, Urochloa mutica, or Urochloa texana.*

Clause 36. A crystalline form B of propanil, characterized by an X-ray powder diffraction pattern displaying at least three of the following peaks: 8.0, 12.6, 15.9, 23.1, 25.4 (± 0.2 degrees 2-theta).

Clause 37. The crystalline form B of clause 36, wherein said pattern displays all the peaks.

Clause 38. The crystalline form B of clause 36 or 37, displaying at least on additional peak selected from 10.5, 18.6, 19.5, 27.6 (± 0.2 degrees 2-theta).

Unless otherwise indicated, all numbers expressing, e.g., amounts or ratios between components, used in this specification, are to be understood as being modified in all instances by the term "about". Accordingly, unless indicated to the contrary, the numerical parameters set forth in this specification are approximations that may vary by up to plus or minus 10% depending upon the desired properties to be obtained by the present invention.

The invention will now be illustrated by the following non-limiting Examples.

### EXAMPLES

### Materials and Methods

***Particle size measurement.*** Particle size was measured using a Malvern Mastersize 3000 instrument equipped with a small sample dispersion unit. Measurement parameters were chosen so that the residual and weighted residual values of the measurements were between 0.8-1.3, for example the refractive index of the sample was set at 1.632 and its absorption at 0.01 for both red and blue light measurements. The background sample time was 20 seconds, and the sample time was 10 seconds. Both the background and the sample measurements were taken with debubbled water that was saturated with Propanil. Drops of the formulation were added to water at RT (20-27 °C at atmospheric pressure) in the unit at a stirring speed of 800 rpm, until the obscuration was between 15-25% and stable (+/- 5% of the obscuration value) for a period of at least 2 minutes. Then the measurement was taken.

***XRPD measurement.*** The XRPD patterns were recorded at room temperature using copper Kα radiation on a PANalytical X'Pert Pro powder diffractometer model PW3040/60 in Bragg-Brentano geometry equipped with a X'celerator detector. The samples were prepared by mounting ~35 mg of the (gently grinded) sample on a PW1818/32 Zero Background Holder with cavity and scanned from 3 to 40 ο2θ using the following acquisition parameters: generator tension 45 kV, generator current 40 mA step size 0.0167 o, scan speed 0.05 o/second or 0.02 o/second, number of steps 2214 and total time 12 min or 30 min (depending on the scan speed).

### Example 1. Measuring the concentration of polymorph B in a propanil-based formulation

Quantitation can be done by X-Ray powder diffraction by calculating the intensity ratio of any specific peak of polymorph B and any specific peak of polymorph A. Due to possible preferred orientation effects, peak intensities may vary between measurements. Peaks of polymorph A that could be used for quantitation are found at about 5.0, 9.9, 14.9, 21.3, 21.7 ± 0.2° two-theta. Peaks of polymorph B that could be used for quantitation are found at about 7.9, 10.4, 22.2 ± 0.2° two-theta. The intensity ratios of the peaks at 22.2/21.3 ± 0.2° two-theta, or the intensity ratios of the peaks at 22.2/21.7 ±0.2° two-theta can be used for reliable quantitation with an error of about 10% polymorph B (absolute value). The method is applicable in the dry mixture of the technical material and also in the formula suspension.

### Example 2. Stability evaluation of propanil-based formulations

Two propanil-based formulations were prepared: (i) a reference formulation; and (ii) a seeding formulation. Then, the size (D₉₀) of propanil particles was measured at several time points: (a) immediately after formulation preparation; (b) after 40 days at rest at room temperature; and (c) after 40 days at rest at room temperature followed by storage at 40°C for 8 weeks. The obtained results are summarized in Table 1.

The reference formulation was prepared as follows: water (up to 100%) was added to a vessel, following by the addition of: (1) a mixture of four surfactants Atlox^{™} 4913, Morwet^{®} D425), Soprophor^{®} TS/54), and Atlas^{®} G-5000 (5.4%); (2) a combination of urea and propylene glycol (10%); and (3) 1,2-benzisothiazolin-3-one and polydimethylsiloxane (about 0.4%). The obtained mixture was stirred until full dispersion. Then, propanil (41%) was added and the solution homogenized using Ultra turrax (High shear homogenizer) at around 12-14 k rpm for 3 minutes. The suspension was then milled using a WAB lab research instrument with 0.3mm ZrO₂ ceramic beads until the desired particle size was achieved. After this Kelzan (about 0.2%) was added and stirred until full dispersion. The pH was changed to 8-9 by the addition of NaOH solution (15%).

The seeding formulation was prepared similarly to the process for the preparation of the reference formulation but with the addition of 10% by weight of a pre-prepared formulation comprising almost completely of polymorph B, before homogenization (the pre-prepared mixture is termed "seeds"). The pre-prepare formulation is the same as the reference formulation. Following preparation, the obtained formulation was left to rest at room temperature for 40 days.

**Table 1**

| | **Particle size (D₉₀**; **in microns)** | | |
|---|---|---|---|
| | immediately after formulation preparation (without resting) | after 40 days at rest at room temperature | after 40 days at rest at room temperature followed by storage at 40°C for 8 weeks |
| Reference formulation | 7.4 | 10.2 | 25 |
| Seeding formulation | 7.4 | 8.6 | 10 |

***Results and conclusions.*** As shown in Table 1, the seeding formulation was highly more stable compared to the reference formulation. More specifically, the seeding formulation had significantly less crystal growth of propanil particles after storage at 40°C for 8 weeks as compared to the reference formulation (10 µm vs 25 µm).

### REFERENCES

Kanawi E., Van Scoy A.R., Budd R., Tjeerdema R.S, Environmental fate and ecotoxicology of propanil: a review, 2016, Toxicological & Environmental Chemistry, 98, 689-704.

## Claims

1. A process for preparing an aqueous suspension concentrate (SC) composition, comprising:
(i) adding water and at least one surfactant(s); (ii) adding at least one agriculturally acceptable excipient selected from an anti-freeze agent, a biocide, an anti-foaming agent, and a mixture thereof; (iii) adding propanil technical material; (iv) milling to obtain said propanil in the form of suspended particles; (v) optionally adding a thickener; and (vi) storing the obtained composition for at least 60 days under 35°C,
wherein:
(a) at least 5% of the propanil technical material added in step (iii) is made of propanil in the form of polymorph B; or following the addition of propanil in step (iii), a pre-prepared propanil-based formulation comprising propanil particles wherein at least 90% of said particles are made of propanil in the form of polymorph B, is added;
(b) said composition has a pH in the range of from about 7.5 to about 11;
(c) the size of the propanil particles obtained after milling is in the range of from about 1 µm to about 25 µm (D₉₀); and
(d) at least 5% of said particles are made of propanil in the form of polymorph B.

2. The process of claim 1, wherein the pH of said composition is adjusted using an inorganic base such as a hydroxide-based salt (e.g., sodium hydroxide) and a carbonate-based salt (e.g., magnesium carbonate).

3. The process of claim 1, wherein said at least one surfactant each independently is selected from a methyl methacrylate graft copolymer (e.g., Atlox^{™} 4913), an alkyl naphthalene sulfonate formaldehyde condensate salt (e.g., Morwet^{®} D425), an ethoxylated tristyrylphenol (e.g., Soprophor^{®} TS/54), and a (C1-C8)-alkyl alcohol ethylene oxide-propylene oxide copolymer (such as n-butoxy butyl alcohol ethylene oxide-propylene oxide block copolymers, e.g., Atlas^{®} G-5000).

4. The process according to any one of claims 1-3, wherein said at least one surfactant is a mixture of four surfactants.

5. The process of claim 4, wherein: (i) a first surfactant is a methyl methacrylate graft copolymer (e.g., Atlox^{™} 4913); (ii) a second surfactant is an alkyl naphthalene sulfonate formaldehyde condensate salt (e.g., Morwet^{®} D425); (iii) a third surfactant is an ethoxylated tristyrylphenol (e.g., Soprophor^{®} TS/54); and (iv) a ourth surfactant is a (C₁-C₈)-alkyl alcohol ethylene oxide-propylene oxide copolymer (such as n-butoxy butyl alcohol ethylene oxide-propylene oxide block copolymers, e.g., Atlas^{®} G-5000).

6. The process according to any one of claims 1-5, wherein at least 10%, e.g., at least 20%, at least 30%, or at least 40%, of said particles are made of propanil in the form of polymorph B.

7. The process of claim 6, wherein: (i) 5% or more of said particles are made of propanil in the form of polymorph B, and the composition is stored for 60 days or more under 35°C in step (vi); (ii) 10% or more of said particles are made of propanil in the form of polymorph B, and the composition is stored for 35 days or more under 35°C in step (vi); or (iii) 20% or more of said particles are made of propanil in the form of polymorph B, and the composition is stored for 25 days or more under 35°C in step (vi).

8. An aqueous suspension concentrate (SC) composition prepared by the process according to any one of claims 1-7.

9. An aqueous suspension concentrate (SC) composition comprising propanil in the form of suspended particles, wherein at least 5% of said particles are made of propanil in the form of polymorph B and the concentration of said polymorph B is measured up to about 24 hours after the preparation of said composition.

10. A method of controlling weed comprising applying to a locus an effective amount of a composition according to any one of claims 8 or 9.

11. The method of claim 10, wherein said locus is a field of crop.

12. The method of claim 10, wherein said weed is *Aeschynomene virginica, Alisma plantago-aquatica, Amaranthus retroflexus, Amaranthus spp., Ammannia coccinea, Brachiaria platyphylla, Butomus umbellatus, Caperonia castaneifolia, Cassia obtusifolius, Croton spp., Cyperus difformis, Cyperus iria, Cyperus spp., Digitaria spp., Echinochloa colonum, Echinochloa crus-galli, Echinochloa crus-pavonis, Echinochloa phyllopogon,*
*Echinochloa spp., Eclipta prostrata, Eleocharis spp., Eleusine indica, Fimbristylis miliacea, Ipomoea spp., Melochia corchorifolia, Panicum texanum, Phacelia hastata, Physalis spp., Rhynchospora corniculate, Rumex crispus, Scirpus mucronatus, Sesbania herbacea, Setaria spp., Setaria viridis, Urochloa mutica, orUrochloa texana.*

13. A crystalline form B of propanil, **characterized by** an X-ray powder diffraction pattern displaying at least three of the following peaks: 8.0, 12.6, 15.9, 23.1, 25.4 (± 0.2 degrees 2-theta).

14. The crystalline form B of claim 13, wherein said pattern displays all the peaks.

15. The crystalline form B of claim 13 or 14, displaying at least on additional peak selected from 10.5, 18.6, 19.5, 27.6 (± 0.2 degrees 2-theta).
